# FASCICULE DE BREVET EUROPEEN

(11) **EP 1 021 959 B1**
(45) Date de publication et mention de la délivrance du brevet: **12.04.2006**
(21) Numéro de dépôt: 00460009.4
(22) Date de dépôt: 25.01.2000
(51) Int. Cl.: A23K 1/14, A23K 1/16, A23K 1/18

(54) **Utilisation d'un aliment pour animaux d'élevage destinés à la production de viande enrichie en acides gras (n-3) polyinsaturés**
Verwendung eines Tierfutters zur Herstellung von einem mit N-3 mehrfachungesättigten Fettsäuren angereicherten Fleisch
Use of an animal feed for producing n-3 polyunsaturated fatty acid-enriched meat

(30) Priorité: 25.01.1999 FR 9900915
(43) Date de publication de la demande: 26.07.2000
(73) Titulaire: Valorex SA, Javene 35133 (FR)
(72) Inventeur: Weill, Pierre, 35770 Vern sur Seiche (FR)
(74) Mandataire: Bloch, Gérard

(56) Documents cités:
- FR-A- 2 732 560
- US-A- 5 069 903
- DATABASE WPI Derwent Publications Ltd., London, GB; AN 1996-219941 XP002117769 & KR 9 407 396 B (FURINA KOREA CO LTD), 18 août 1994 (1994-08-18)

## Description

L'invention concerne le domaine de l'alimentation animale et plus précisément le domaine de l'alimentation des animaux destinés à la production de viande.

Plus précisément, l'invention se rapporte à l'utilisation d'un aliment spécialement conçu pour la production de viande enrichie en acides gras (n-3) polyinsaturés.

Les principaux acides gras polyinsaturés présentent une première insaturation se situant soit sur le troisième atome de carbone, soit sur le sixième atome de carbone. Les premiers sont dits (n-3) polyinsaturés ou insaturés en oméga-3 et les seconds (n-6) polyinsaturés ou insaturés en oméga-6.

Pour mémoire, on rappelle que les acides gras (n-3) polyinsaturés sont essentiellement constitués par :
- l'acide alpha-linolénique (ALA), souvent désigné par C18:3 (n-3) et précurseur de tous les acides gras (n-3) polyinsaturés;
- l'acide eicosapentaénoïque (EPA), C20:5 (n-3);
- l'acide docosapentaénoïque (DPA), C22:5 (n-3);
- l'acide docosahexaénoïque (DHA), C22:6 (n-3).

De nombreuses études ont montré les rôles physiologiques importants joués chez l'homme par ces molécules. On a ainsi notamment mis en évidence que les acides gras (n-3) polyinsaturés favorisent la fluidité du sang et que leur absorption permet de diminuer les risques cardio-vasculaires liés à une triglycéridémie trop élevée. Plus précisément, il a été démontré que la présence dans l'alimentation quotidienne des acides gras (n-3) polyinsaturés conditionne le métabolisme lipidique et diminue les risques de maladies cardio-vasculaires en abaissant le taux de triglycérides sériques. D'autres études ont montré l'implication de ces molécules dans la fonction sexuelle et la résistance aux infections.

Les maladies cardio-vasculaires représentent la première cause de mortalité dans les pays occidentaux. Or, dans ces pays, l'alimentation humaine est le plus souvent carencée en acides gras (n-3) polyinsaturés. Il est ainsi souhaitable pour l'homme de consommer des aliments présentant une teneur importante en acides gras (n-3) polyinsaturés.

L'objectif principal de la présente invention est donc de permettre la production d'un aliment abondamment utilisé dans l'alimentation humaine, à savoir la viande, enrichie en acides gras (n-3) polyinsaturés.

Les acides gras (n-3) polyinsaturés sont présents en grandes quantités dans les végétaux et particulièrement abondants dans les végétaux en phase de croissance rapide, tels que l'herbe jeune de printemps par exemple. Les animaux qui consomment ces végétaux y trouvent une source importante en ces composés. Or, les méthodes d'élevage modernes privilégient une alimentation riche en céréales (en l'état ou ensilées) beaucoup plus pauvres en acides gras (n-3) polyinsaturés que les fourrages verts. Par voie de conséquence, la teneur de la viande en ces composés est réduite alors que la teneur de celle-ci en acide gras saturés est augmentée.

L'objectif principal de la présente invention est donc de permettre la production de viandes (de bovins, d'ovins, de porcins ou de volailles...) enrichies en acides gras (n-3) polyinsaturés. De telles viandes pourront trouver leur place notamment dans les régimes proposés aux consommateurs soucieux de l'équilibre diététique de leur alimentation.

Cet objectif est atteint grâce à l'utilisation pour l'alimentation d'animaux d'élevage destinés à la production de viande enrichie en acides gras (n-3) polyinsaturés d'un aliment comprenant des graines de lin extrudées.

Grâce à un tel aliment, la viande produite par les animaux ainsi nourris est plus riche qu'une viande ordinaire en acides gras (n-3) polyinsaturés. Son pouvoir cholestérolémiant est réduit. Dans certains cas, la teneur en acides gras saturés est parallèlement abaissée.

On notera, qu'à la connaissance de la Demanderesse, il n'avait jamais été proposé dans l'état de la technique, d'aliment pour animaux d'élevage spécialement conçu pour permettre l'obtention de viande enrichie en acides gras polyinsaturés et comprenant des graines de lin extrudées. Dans US 5 069 903 ce but est atteint grâce à des graines de lin crues et broyées. Par ailleurs, des graines de lin extrudées on été utilisées pour réduire la teneur en matières grasses du lait (FR 2 732 560).

La graine de lin présente le double intérêt d'être constituée d'environ 40 % d'huile présentant une teneur très élevée en ALA, de l'ordre de 55 %, et de contenir entre 20 et 25 % de protéines. Toutefois, cette graine présente également l'inconvénient d'être riche en mucilages et en facteurs anti-nutritionnels (agents cyanogènes). L'extrusion permet de détoxifier les graines de lin. Un tel traitement, qui combine un action mécanique et l'action de la vapeur, permet de faire éclater les cellules des graines, de libérer les constituants de celles-ci et de favoriser leur hydrolyse. Ce procédé consiste à forcer, en présence de vapeur à une température d'environ 125°C le produit à travers une filière en le comprimant à l'aide d'une vis tournant à grande vitesse. L'extrusion permet d'obtenir des modifications importantes des propriétés physico-chimiques des constituants de la substance extrudée et une amélioration notable de sa digestibilité par la destruction des facteurs anti-nutritionnels, la suppression des germes contaminants et l'élimination des odeurs désagréables. Compte-tenu de la forte sensibilité à la chaleur des facteurs anti-nutritionnels cyanogènes de la graine de lin, l'extrusion s'est avérée être une technique particulièrement efficace pour détoxifier ces graines de lin.

Préférentiellement, l'aliment selon la présente invention contient au moins 1% en poids de graine de lin.

Egalement préférentiellement, le lin utilisé provient d'au moins une variété de lin sélectionnée pour sa forte teneur en acide gras (n-3) polyinsaturés. Une telle variété contient préférentiellement plus de 20 % en poids d'acides gras (n-3) polyinsaturés.

L'invention concerne également tout procédé d'alimentation d'animaux d'élevage destinés à la production de viande enrichie en acide gras (n-3) polyinsaturés caractérisé en ce qu'il consiste à apporter auxdits animaux une ration journalière d'un aliment tel que décrit ci-dessus pendant une période d'au moins 30 jours avant abattage pour les bovins ovins ou porcins et pendant toute la durée de vie des animaux pour les oiseaux.

L'invention, ainsi que les différents avantages qu'elle présente, seront plus facilement compris grâce à la description qui va suivre de modes de réalisation de celle-ci, donnés à titre purement illustratif.

### Exemple 1 : Bovins.

On a intégré dans la ration journalière alimentaire de bovins des graines de lin extrudées.

Le traitement d'extrusion des graines de lin a consisté dans les étapes suivantes :
- broyage ;
- préconditionnement par imprégnation de vapeur ;
- maturation (30 mn à 90°C sous atmosphère saturée de vapeur);
- extrusion ;
- séchage par injection d'air chaud.

Deux lots de 17 bovins mâles de race charolaise (lot essai n°1 et lot essai n°2) ont été engraissés avec des rations alimentaires intégrant des graines de lin extrudées à raison de 4 % en poids et de 2% en poids.Un troisième lot de 17 bovins mâles (lot témoin) a été engraissé avec une ration alimentaire n'intégrant pas de graines de lin. Les compositions des rations alimentaires journalières administrées aux différents lots de bovins sont données dans le tableau 1 ci-après, dans lequel toutes les valeurs sont exprimées en kilogrammes de matières sèches (MS).

**Tableau 1**

| Lot de bovins | N° 1 | N°2 | Témoin |
|---|---|---|---|
| Paille de céréales | 3 | 3 | 3 |
| Pulpe d e betteraves | 2,5 | 2,15 | 1,75 |
| Luzerne déshydratée | 2,5 | 2,15 | 1,75 |
| Tourteaux de tournesol | 1 | 1 | 1 |
| Son fin de blé | 1 | 1 | 1 |
| Tourteau de soja | 1 | 1,25 | 1,25 |
| Orge aplatie | 1 | 1,75 | 2,5 |
| Graine de lin extrudée | 0,5 | 0,25 | 0 |

Après abattage, on a mesuré les teneurs des viandes provenant de chacun des animaux en acides gras (n-3) polyinsaturés et en acide linoléique conjugué (ALC). Ces composés se retrouvent dans le gras interne de la viande qui représente 2 à 3 % du poids de celle-ci.

Les teneurs des viandes obtenues en ces composés sont données dans le tableau 2 ci-après.

**Tableau 2**

| | Lot N°1 | Lot N°2 | Lot témoin |
|---|---|---|---|
| Nb de bovins | 17 | 17 | 17 |
| Poids moyen début (kg) | 550 | 550 | 550 |
| Poids moyen fin (kg) | 700 | 700 | 700 |
| Durée engraissement (j) | 100 | 108 | 112 |
| Poids moyen carcasse (kg) | 399 | 400 | 402 |
| Quantité de ration alimentaire journalière par animal (kg de MS) | 12,5 | 12,5 | 12,5 |
| Quantité de ration alimentaire ingérée par animal sur la durée d'engraissement (kg de MS) | 1250 | 1350 | 1400 |
| Quantité de graines de lin ingérées par jour par animal (kg de MS) | 0,5 | 0,25 | 0 |
| Teneur moyenne de la viande en acides gras (n-3) polyinsaturés (% de la matière grasse intramusculaire) | 1,20 | 0,8 | 0,5 |
| Teneur moyenne de la viande en Acide linoléique conjugué (% de la matière grasse intramusculaire) | 1 | 0,75 | 0,6 |

L'intégration de graines de lin extrudées dans l'alimentation des bovins permet donc d'augmenter de façon sensible la teneur en acides gras (n-3) polyinsaturés de la viande de bovin dont celle en acide linoléique.

Parallèlement, on a également mesuré la teneur en acides gras saturés de ces viandes. Cette observation a permis de constater une baisse de 70 mg/kg du taux d'acide palmitique (hypercholestérolémiant). L'aliment selon l'invention permet donc non seulement d'augmenter le taux d'acides gras (n-3) polyinsaturés bons pour la santé mais également d'abaisser le taux d'acides gras saturés dont l'excès est nocif pour la santé.

### Exemple 2 : Porcs

On a intégré dans la ration journalière alimentaire de porc des graines de lin extrudées.

Le traitement d'extrusion des graines de lin a été le mêm que celui mentionné à l'exemple 1.

Deux lots de 40 porcs males et femelles (lot essai n° 1 et lot essai n°2) ont été nourris pendant 60 jours avant abattage avec des rations alimentaires intégrant des graines de lin extrudées à raison de 3 % en poids et de 1,5 % en poids.Un troisième lot de 40 porcs mâles et femelles (lot témoin) a été nourri pendant 60 jours avant abattage avec une ration alimentaire n'intégrant pas de graines de lin. Les compositions des rations alimentaires journalières administrées aux différents lots de porcs sont données dans le tableau 3 ci-après, dans lequel toutes les valeurs sont exprimées en pourcentage en poids.

**Tableau 3**

| Lot | N° 1 | N°2 | Témoin |
|---|---|---|---|
| Blé | 20 | 20 | 20 |
| Maïs | 15 | 17 | 19 |
| Orge | 12 | 11 | 13 |
| Son | 8 | 7,75 | 6,5 |
| Remoulage | 8 | 7,75 | 6,5 |
| Pois | 20 | 20 | 20 |
| Tourteau de colza | 5 | 5,5 | 5,5 |
| Tourteau de soja | 5 | 5,5 | 5,5 |
| Graine de lin extrudée | 3 | 1,5 | 0 |
| Minéraux | 3 | 3 | 3 |
| Graisse | 1 | 1 | 1 |

Après abattage, on a mesuré les teneurs des viandes provenant de chacun des animaux en acides gras (n-3) polyinsaturés. Ces composés se retrouvent dans le gras et dans le gras intramusculaire de la viande. Les résulats sont donnés dans le tableau 4 ci-après.

**Tableau 4**

| | Lot N°1 | Lot N°2 | Lot témoin |
|---|---|---|---|
| Nb de porcs | 40 | 40 | 40 |
| Poids moyen (kg) | 100 | 100 | 100 |
| Durée distribution(j) | 60 | 60 | 60 |
| Quantité de ration alimentaire journalière par animal (kg de MS) | 2,4 | 2,4 | 2,4 |
| Quantité de ration alimentaire ingérée par animal sur la durée de distributionnt (kg de MS) | 144 | 144 | 144 |
| Quantité de graines de lin ingérées par jour par animal (kg de MS) | 0,072 | 0,036 | 0 |
| Teneur moyenne du gras de la viande en acides gras (n-3) polyinsaturés (% de la matière grasse intramusculaire) | 5 | 3,7 | 2,5 |
| Teneur moyenne du gras externe de la viande en acides gras (n-3) polyinsaturés (% de la matière grasse externe) | 3,9 | 3 | 1,9 |

L'intégration de graines de lin extrudées dans l'alimentation des proc permet donc d'augmenter de façon sensible la teneur en acides gras (n-3) polyinsaturés de la viande de porcs.

### Exemple 3 : Volailles

Un aliment pour volailles incluant 1% en poids de graines de lin extrudées à été réalisé.

Le traitement d'extrusion des graines de lin a été le même que celui décrit ci-dessus en référence à l'exemple 1.

Des volailles de 1kg, 2kg, 3kg et 4 kg ont été nourries avec cet aliment respectivement à raison de 1,5 kg, 4 kg, 6 kg en quantités cumulées sur leur durée de vie.

Des volailles témoins du même poids on été nourries avec un aliment standard.

Les teneurs des viandes obtenues en acides gras (n-3) polyinsaturés sont données dans le tableau 5 ci-après.

**Tableau 5**

| | | | | |
|---|---|---|---|---|
| Poids des volailles (kg) | 1 | 2 | 3 | 4 |
| Ration Aliment Y par animal (kg MS) | 1,5 | 4 | 6 | 8,5 |
| Tenur en graines de in de l'alimentY (%) | 1 | 1 | 1 | 1 |
| Teneur de la viande en acides gras (n-3) polyinsaturés (mg) | 450 à 600* | 450 à 600* | 450 à 600* | 450 à 600* |
| Augmention de la teneur en acides gras (n-3) polyinsaturés par rapport aux lots témoins (mg) | 500 | 500 | 500 | 500 |

| | | | | |
|---|---|---|---|---|
| * on note des valeurs variables en fonction des différents animaux de chaque lot | | | | |

L'aliment utiisé permet donc d'augmenter de façon sensible la teneur en acides gras (n-3) polyinsaturés de la viande de volailles.

## Revendications

1. Utilisation, pour l'alimentation d'animaux d'élevage destinés à la production de viande enrichie en acide gras (n-3) polyinsaturés, d'un aliment comprenant des graines de lin extrudées.

2. Utilisation selon la revendication 1 d'un aliment comprenant au moins 1 % en poids de graines de lin extrudées.

## Patentansprüche

1. Verwendung eines extrudierte Flachssamen enthaltenden Futters zur Fütterung von Tieren zur Zucht, die zur Produktion von mit mehrfach ungesättigten n-3-Fettsäuren angereichertem Fleisch vorgesehen sind.

2. Verwendung nach Anspruch 1 eines wenigstens 1 Gew.-% extrudierte Flachssamen enthaltenden Futters.

## Claims

1. Use of a foodstuff comprising extruded flax seed for feeding farmed animals intended for the production of meat enriched with polyunsaturated fatty acid (n-3).

2. Use as claimed in Claim 1 of a foodstuff comprising at least 1% by weight of extruded flax seed.
